# EUROPÄISCHE PATENTSCHRIFT

(11) **EP 1 883 560 B1**
(45) Veröffentlichungstag und Bekanntmachung des Hinweises auf die Patenterteilung: **10.09.2008**
(21) Anmeldenummer: 06753499.0
(22) Anmeldetag: 25.04.2006
(51) Int. Cl.: B60R 7/04

(54) **STAUBEHÄLTERANORDNUNG**
STOWAGE CONTAINER ARRANGEMENT
ENSEMBLE RECEPTACLE DE RANGEMENT

(30) Priorität: 28.04.2005 DE 102005020700
(43) Veröffentlichungstag der Anmeldung: 06.02.2008
(73) Patentinhaber: Faurecia Innenraumsysteme GmbH, 76767 Hagenbach (DE)
(72) Erfinder: SMETHAM, MIke, 38458 Velpke (DE); ESPE, Carsten, 57539 Etzbach (DE)
(74) Vertreter: Pfenning, Meinig & Partner GbR
(86) Internationale Anmeldenummer: PCT/EP2006/004229
(87) Internationale Veröffentlichungsnummer: WO 2006/114337

(56) Entgegenhaltungen:
- DE-A1- 4 433 422
- DE-U1- 29 701 539
- US-A- 5 934 532
- US-B1- 6 196 605

## Beschreibung

Die Erfindung betrifft eine Staubehälteranordnung, die insbesondere zur Installation in einer Türverkleidung einer Tür eines Fahrzeugs geeignet ist.

Es ist bekannt, Staubehälter in einem Innenraum eines Fahrzeugs vorzusehen. Staubehälter finden sich in der Regel in den Türen, zwischen den Sitzen, in der Instrumententafel, oder auch auf der Rückseite der Vordersitze oder im Bereich der Säuleninnenverkleidung.

Staubehälter haben die Aufgabe, verschiedene Arten von Gegenständen, wie z.B. Landkarten, Fahrzeugschwämme, Naturalien, aber auch Abfälle wie z.B. Verpackungsreste oder Essensreste aufzunehmen.

Es ist ebenfalls bekannt, Staubehälter als separate Bauteile auszubilden, die einer Aufnahmeform entnehmbar sind.

So ist in der DE 199 58 524 A1 ein Staubehälter offenbart, der sich nach manueller Entriegelung von Fixiermitteln einer Aufnahmeform entnehmen lässt. Der Staubehälter enthält Staufächer mit Öffnungen, in die Sachen abgelegt werden können. Angeordnet ist der Staubehälter parallel neben einem Fahrzeugsitz eines Kraftfahrzeugs.

Nachteil dieses eben genannten Staubehälters ist die aufwendige Konstruktion und insbesondere der aufwendige Verriegelungsmechanismus, wodurch der Einsatz solch eines Staubehälters an Orten, an denen insbesondere der Platz beschränkt ist, wie z.B. in einer Seitentür, nicht sinnvoll ist.

Eine Staubehälteranordnung gemäß dem Oberbegriff des Anspruchs 1 ist aus der US-A-5 934 532 bekannt.

Die Aufgabe der vorliegenden Erfindung ist es nun, einen Staubehälteranordnung mit einem Staubehälter und einer Aufnahmeform zu schaffen, wobei der Staubehälter auf einfache Art und Weise der Aufnahmeform entnommen bzw. in die Aufnahmeform eingesetzt werden kann und der von der Aufnahmeform sicher gehalten wird und gegen eine missbräuchliche Entnahme geschützt ist, und Staubehälter und Aufnahmeform eine einfache Konstruktion aufweisen und somit der Staubehälter sich insbesondere zur Unterbringung in einer Seitentür eines Kraftfahrzeugs eignet.

Diese Aufgabe wird durch eine Staubehälteranordnung nach Anspruch 1 gelöst.

Dadurch, dass die Aufnahmeform einen Hinterschnitt und eine Aussparung aufweist, und der Staubehälter mit seiner Außenkontur zumindest teilweise in den Hinterschnitt eingreift, und der Staubehälter eine manuell betätigbare Biegefeder mit einer Rastnase aufweist, und die Rastnase der Biegefeder in die Aussparung der Aufnahmeform eingreift, ist eine Staubehälteranordnung geschaffen, in der der Staubehälter im eingesetzten Zustand sicher gehalten wird, aber schnell der Aufnahmeform entnommen werden kann. Aufgrund der einfachen Konstruktion ist es insbesondere möglich, die Staubehälteranordnung auch an Orten mit wenig Platz unterzubringen, insbesondere in einer Tür eines Kraftfahrzeugs.

Der Staubehälter ist in der Aufnahmeform durch eine Verriegelung fixiert, die durch eine Biegefeder mit einer Rastnase und einer Aussparung hergestellt wird. Im eingesetzten Zustand greift die Rastnase in die Aussparung ein. Durch ein manuelles Anheben der Biegefeder ist diese Verriegelung zu lösen.

Die Aussparung kann beispielsweise durch einen Hinterschnitt gebildet sein. Ein geeigneter Hinterschnitt kann beispielsweise durch eine Rippe oder einen Vorsprung umgesetzt sein.

Vorteilhafterweise ist die Verriegelung selbstfindend. Dies wird beispielsweise dadurch erreicht, dass die Rastnase keilförmig ausgebildet ist, und somit beim Einsetzten des Staubehälters in die Aufnahmeform ohne Betätigung der Biegefeder selbsttätig einrastet.

Die sichere Lagerung des in die Aufnahmeform eingesetzten Staubehälters wird durch Hinterschnitt und Verriegelung gewährleistet. Durch die Verriegelung ist der Staubehälter in der Aufnahmeform fixiert. Dadurch, dass der Staubehälter mit seiner Außenkontur in den Hinterschnitt der Aufnahmeform eingreift, ist eine zusätzliche Stabilisierung des Staubehälters in der Auflageform erreicht. Der Hinterschnitt kann hierbei auf verschiedene Weisen, beispielsweise als Nut, ausgebildet sein.

Des weiteren kann auch die Formgestaltung der Aufnahmeform zur Stabilisierung der Lage des Staubehälters ausgenutzt werden. Bevorzugt ist die Aufnahmeform als Mulde ausgebildet, so dass der Staubehälter nur in einer Richtung der Aufnahmeform entnommen werden kann.

Vorteilhafte Weiterbildungen der Erfindung werden in den abhängigen Ansprüchen beschrieben.

Eine vorteilhafte Weiterbildung der Erfindung ist, dass die Aufnahmeform in ihrem Randbereich einen Vorsprung aufweist, durch den der Hinterschnitt gebildet wird.

Eine weitere vorteilhafte Weiterbildung der Erfindung ist, dass die Oberkante des Vorsprungs, durch die der Hinterschnitt abgeschlossen wird, geradlinig verläuft.

Eine weitere vorteilhafte Weiterbildung der Erfindung ist, dass Hinterschnitt und Aussparung der Aufnahmeform in zwei gegenüberliegenden Randbereichen der Aufnahmeform angeordnet sind.

Dadurch, dass Hinterschnitt und Aussparung der Aufnahmeform in zwei gegenüberliegenden Randbereichen der Aufnahmeform angeordnet sind, führt der Staubehälter beim Lösen der Verriegelung und Entnahme des Staubehälters eine Schwenkbewegung aus. Die Achse dieser Schwenkbewegung ist durch den Eingriff der Außenkontur des Staubehälters in den Hinterschnitt definiert. Diese Schwenkbewegung wird insbesondere dadurch möglich, das die Oberkante des Vorsprungs, durch die der Hinterschnitt abgeschlossen wird, geradlinig verläuft.

Eine weitere vorteilhafte Weiterbildung der Erfindung ist, dass Staubehälter und Aufnahmeform einen Formschluss bilden.

Dadurch ist einerseits die Lagerung des Staubehälters in der Aufnahmeform stabilisiert, andererseits wird auf diese Weise der "freie" Raum der Aufnahmeform, insbesondere wenn diese als Mulde ausgebildet ist, als Stauraum für den Staubehälter ausgenutzt.

Eine weitere vorteilhafte Weiterbildung der Erfindung ist, dass die der Aufnahmeform zugewandte Seite des Staubehälters gewölbt ist.

Eine Wölbung ist insbesondere für den Fall vorteilhaft, in dem der Staubehälter formschlüssig in einer muldenförmigen Aufnahmeform liegt, und durch den Hinterschnitt eine Schwenkachse definiert ist: Die Wölbung ist in diesem Fall senkrecht zur Schwenkachse ausgebildet. Die Wölbung ist notwendig, damit der Staubehälter beim Schwenken um die Schwenkachse sich nicht mit der Aufnahmeform verkantet.

Des weiteren kann insbesondere durch eine Wölbung eine besonders steife Konstruktion der Staubehälteranordnung erreicht werden. Integriert in einer Fahrzeugtür kann dadurch eine sog. "pelvis pusher" - Funktion gewährleistet sein: Bei einem Seitenaufprall auf die Fahrzeugtür würde die Fahrzeugtür aufgrund ihrer Steifigkeit einen Insassen in das Fahrzeuginnere schieben und diesen somit vor Glas- bzw. Metallteilen schützen.

Prinzipiell sind aber auch andere Formen, beispielsweise rechteckige Formen, des Staubehälters möglich. Die Aufnahmeform muss, um die Entnahme des Staubehälters zu ermöglichen, entsprechend angepasst sein.

Eine weitere vorteilhafte Weiterbildung der Erfindung ist, dass die Biegefeder innerhalb des Staubehälters angeordnet ist und durch eine Öffnung in der Rückseite des Staubehälters in die Aussparung der Aufnahmeform eingreift.

Auf diese Weise ist die Biegefeder gegen unbeabsichtigtes Lösen geschützt. Auch ist die Verriegelung von außen nicht sichtbar, was einerseits optische Vorteile besitzt, und andererseits, da die Verriegelung auf der sichtseitige Oberfläche des Staubehälters nicht aufträgt, auch sicherheitstechnische Vorteile besitzt.

Eine weitere vorteilhafte Weiterbildung der Erfindung ist, dass die Biegefeder als ein über die sichtseitige Öffnung des Staubehälters zugängiger Untergriff ausgebildet ist.

Auf diese Weise wird die Biegefeder von Müll oder anderen Gegenständen, die in den Staubehälter gesteckt werden, nicht verdeckt oder beschmutzt, da die Biegefeder oberhalb der sichtseitigen Öffnung des Staubehälters liegt.

Eine weitere vorteilhafte Weiterbildung der Erfindung ist, dass die Außenränder der Aufnahmeform und des Staubehälters sichtseitig auf gleicher Höhe abschließen.

Eine weitere vorteilhafte Weiterbildung der Erfindung ist, dass die sichtseitige Oberfläche des Staubehälters eben ist.

Durch Reduzierung von Kanten und durch die flächige Gestaltung des Staubehälters werden die Stellen minimiert, an denen sich Passanten stoßen und verletzen können.

Des weiteren offenbart die Erfindung eine Fahrzeugtür, enthaltend eine erfindungsgemäße Staubehälteranordnung, wobei die Aufnahmeform durch eine Aussparung einer zur Fahrzeugtür gehörenden Türinnenverkleidung gebildet wird.

Die erfindungsgemäße Staubehälteranordnung lässt sich gleichermaßen in einer Mittelkonsole oder einer Seitenverkleidung integrieren.

Die Erfindung wird nun anhand mehrere Figuren erläutert. Dabei zeigen:
- Figur 1: einen Querschnitt einer erfindungsgemäßen Staubehälteranordnung eingebaut in einer Seitentür eines Fahrzeugs,
- Figur 2 und Figur 3: eine Verriegelungsanordnung der erfindungsgemäßen Staubehälteranordnung,
- Figur 4: eine Seitenansicht der erfindungsgemäßen Staubehälteranordnung eingebaut in einer Seitentür eines Fahrzeugs.

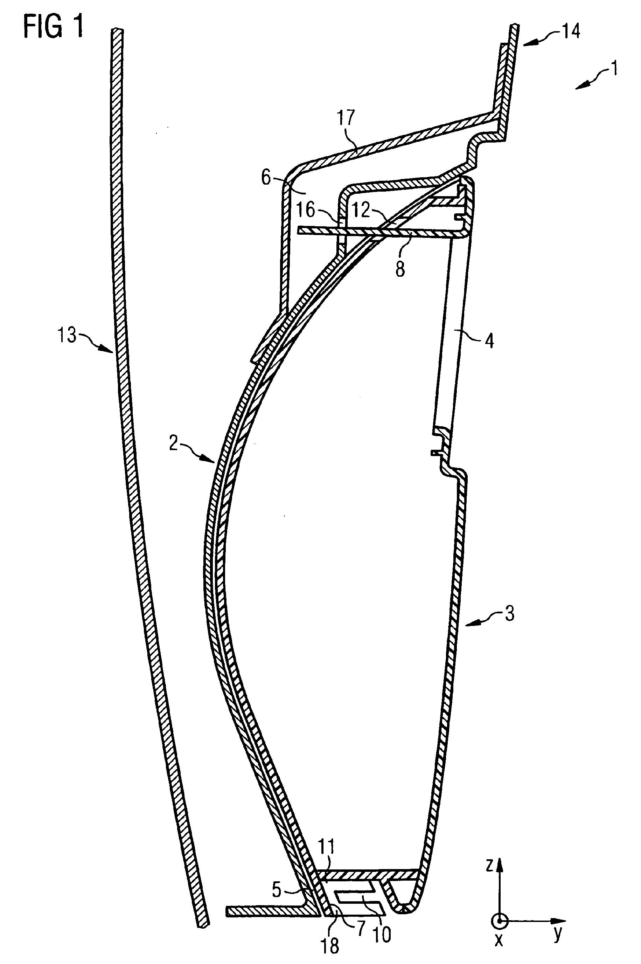

Figur 1 zeigt einen Querschnitt einer erfindungsgemäßen Staubehälteranordnung 1 eingebaut in einer Seitentür 13 eines Fahrzeugs.

Die Staubehälteranordnung 1 enthält eine Aufnahmeform 2 und einen in die Aufnahmeform 2 eingesetzten Staubehälter 3.

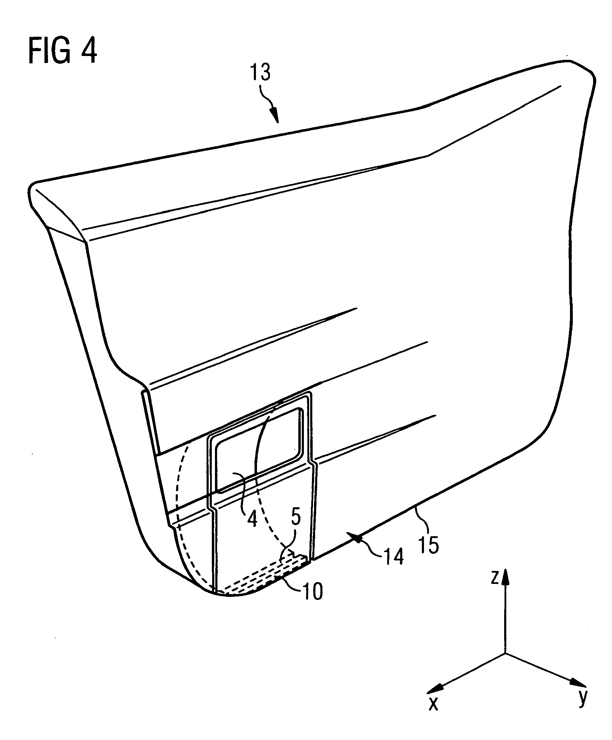

Die Aufnahmeform 2 wird durch eine Türinnenverkleidung 14 einer Fahrzeugtür 13 (siehe hierzu auch Figur 4) gebildet. Sie besitzt die Form einer Mulde (siehe auch Figur 4). Die Mulde ist in der z-y-Ebene gewölbt. Die Seitenwände der Mulde werden durch zwei in der z-y-Ebene liegenden parallelen Flächen gebildet.

In ihrem oberen Randbereich weist die Aufnahmeform eine Aussparung 6 auf. Die Aussparung 6 wird gebildet durch eine sich im oberen Bereich der Mulde befindende zusätzlichen Wand 17, die innerhalb der Fahrzeugtür hinter der Mulde der Aufnahmeform 2 angeordnet ist. Diese zusätzliche Wand 17 kann in einer Kartentaschenrückwand enthalten sein.

Die Aussparung 6 ist zugänglich über eine Öffnung 16 in der Mulde der Aufnahmeform 2. In diesem Bereich folgt die Aufnahmeform nicht der Linie der Wölbung, sondern ist erst nach oben in z-Richtung abknickt, dann in y-Richtung geknickt, und folgt dann wieder der Wölbungslinie. Die Öffnung 16 befindet sich auf der Strecke zwischen dem ersten und dem zweiten Knickpunkt, ist also in y-Richtung orientiert.

Im unteren Randbereich besitzt die Aufnahmeform 2 einen Vorsprung 10. Der Vorsprung verläuft geradlinig in x-Richtung und hat die Form eines geöffneten, U-förmigen Balkens, wobei die Öffnung in y-Richtung orientiert ist. Die Unterkante 18 des Vorsprungs 10 schließt dabei mir der Unterkante der Türverkleidung ab.

Der Vorsprung 10 ist der Wölbungslinie der Aufnahmeform 2 etwas in y-Richtung vorgelagert. Durch diese Vorlagerung wird ein rinnenartiger Hinterschnitt 5 gebildet, der durch die Oberkante 11 und die Unterkante 18 des Vorsprungs 10 abgeschlossen wird.

In seiner Verlängerung in x-Richtung ist der Vorsprung 10 mit der Türverkleidung verbunden.

Der Staubehälter 3 ist rückseitig der Form der Aufnahmeform 2 angepasst, die Rückseite ist somit gewölbt. Sichtseitig besitzt der Staubehälter 3 eine glatte Oberfläche, die sich aus zwei etwas über der mittleren Höhe des Staubehälters 3 in y Richtung leicht versetzten in x-z-Ebene liegenden Flächen aufbaut.

Im oberen Drittel besitzt der Staubehälter 3 eine sichtseitige rechteckige Öffnung 4, durch die der Staubehälter befüllt oder geleert werden kann.

Im oberen Randbereich weist der Staubehälter 3 eine Biegefeder 8 mit zwei Rastnasen 9 (in dieser Darstellung nicht sichtbar) auf. Die Biegefeder wird in dieser Ausführungsform durch einen verlängerten Abschnitt der die sichtseitige Oberfläche bildenden Front gebildet, die oberhalb der Öffnung 4 liegt. Am Ende des verlängerten Abschnitts befinden sich zwei gegenüberliegende Kerben, wodurch zwei Rastnasen 9 gebildet werden.

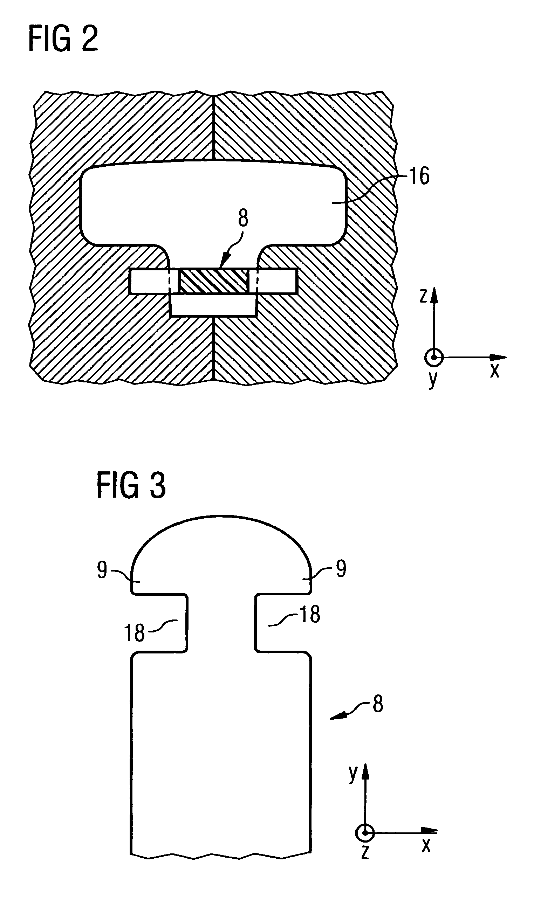

Der verlängerte Teil knickt am oberen Rand der Öffnung 4 rechtwinklig nach innen ab. Durch eine Öffnung 12 in der Rückwand des Staubehälters 3 und durch die Öffnung 16 der Aufnahmeform 2 greift die Biegefeder 8 in die Aussparung 6 ein, wodurch eine Verriegelung hergestellt ist (für Details siehe Figur 2 und Figur 3 mit entsprechender Beschreibung). Durch ein Anheben der Biegefeder ist diese Verriegelung lösbar.

Die Biegefeder 8 ist somit innerhalb des Staubehälters 2 angeordnet. In der vorliegenden Form ist sie als Untergriff ausgebildet. Zugänglich ist der Untergriff über die sichtseitige Öffnung 4 des Staubehälters 3.

Der Staubehälter liegt formschlüssig in der von der Aufnahmeform 2 gebildeten Mulde. Die Unterseite des Staubehälters 3 liegt dabei flächig auf dem vorgelagerten Vorsprung 10 der Aufnahmeform 2 auf. Die Kontur des Staubehälters erstreckt sich über den Vorsprung 10 hinweg his hin zum unteren Rand der Türverkleidung 14, so dass sichtseitig der Staubehälter 3 den Vorsprung 10 überdeckt.

Des weiteren weist im unteren Randbereich die der Aufnahmeform 2 zugewandte Außenkontur des Staubehälters 3 einen Steg 7 auf. Der Steg 7 greift in den durch den vorgelagerten Balken 10 gebildeten Hinterschnitt 5 der Aufnahmeform 2 ein.

Der Staubehälter 3 besteht nur aus zwei Komponenten. Beide Komponenten wurden in einem Spritzgussprozess geformt und dann nachträglich miteinander verschweißt. Als Material wurde Polypropylen verwendet.

Soll der Staubehälter 3 entnommen werden, so wird durch Anheben der Biegefeder 8 zuerst die Verriegelung gelöst. Durch Ziehen des Staubehälters 3 in x-Richtung schwenkt der Staubehälter 3 um die durch den Vorsprung 10 definierte Schwenkachse nach vorne.

Durch die gewölbte Form von Staubehälter 3 und Aufnahmeform 2 wird das Vorschwenken nicht behindert.

Durch das Vorschwenken wird der Steg 7 teilweise aus dem Hinterschnitt 5 gezogen. Ab einem Kippwinkel von etwa 20° lässt sich der Staubehälter nach oben wegziehen und somit aus der Aufnahmeform 2 entfernen.

Figur 2 und Figur 3 zeigen die Verriegelung der Staubehälteranordnung 1. In Figur 2 ist die Biegefeder 8 dargestellt, die durch die Öffnung 16 in der Mulde der Aufnahmeform 2 in die Aussparung 6 der Aufnahmeform 2 eingreift. In Figur 3 ist der vordere Teil der Biegefeder 8 dargestellt.

Die Feder 8 besitzt die Form eines länglichen (y-Richtung), breiten (x-Richtung) und flachen (z-Richtung) Blattes. An ihrem Ende ähnelt die Form der Biegefeder 8 der eines Pilzes: Das Ende der Feder 8 ist abgerundet, und vor dem abgerundeten Ende befinden sich zwei gegenüberliegende Einkerbungen 18. Durch diese Form sind zwei gegenüberliegenden Rastnasen 9 gegeben.

Wie Figur 2 darstellt, besitzt die Öffnung 16 der Aufnahmeform 2 in der x-z-Ebene eine T-Form. Die Breite der Öffnung ist groß genug, dass die Biegefeder mit genügend Spiel mit ihrem Ende durch den oben liegenden, breiten Bereich der Öffnung 16 geschoben werden kann (dieser Bereich wäre in obiger Analogie der Querbalken des T's).

Im eingerasteten Zustand befindet sich das Ende der Biegefeder im unteren Bereich der Öffnung 16. Ein Eintreten der Biegefeder in diesen unteren Bereich der Öffnung 16 ist nur mit dem durch die Einkerbungen 18 erzeugten schmalen Bereich der Biegefeder 8 möglich. In diesem Zustand hintergreifen die Rastnasen 9 die Muldenwand der Aufnahmeform 2.

Die Entriegelung des Staubehälters 3 wird durch ein Anheben der Biegefeder 8 erreicht. Die Biegefeder 8 muss soweit angehoben werden, dass die Rastnasen 9 die Muldenwand der Aufnahmeform 2 nicht mehr hintergreifen.

Figur 4 zeigt eine Seitenansicht der erfindungsgemäßen Staubehälteranordnung 1 eingebaut in der Seitentür 13 eines Fahrzeugs.

Wie in der Figur gezeigt, ist die sichtseitige Oberfläche bündig mit dem Umgebungsbereich der Türinnenverkleidung 14. Der untere Rand der Türinnenverkleidung 15 wird durch den unteren Rand des Staubehälters 3 weitergeführt, so dass auch hier keine störenden Kanten vorhanden sind.

Mit gestrichelten Linien wird die Form der Aufnahmeform 2, sowie der Hinterschnitt 5 und der Vorsprung 10 angedeutet. Wie in der Figur zu erkennen, entspricht die Breite (in x-Richtung) des Vorsprungs 10 nicht der Breite der Mulde der Aufnahmeform 2. Dies liegt daran, der Rand der Fahrzeugtür 13, in dessen Bereich die Staubehälteranordnung angeordnet ist, gebogen ist. Die Form der Aufnahmeform 2 und des Staubehälters 3 ist entsprechend angepasst, unter anderem ist auch die Breite des Vorsprungs 10 verkürzt.

## Patentansprüche

1. Staubehälteranordnung (1), insbesondere für den Innenbereich eines Fahrzeugs, enthaltend eine Aufnahmeform (2) und einen der Aufnahmeform (2) entnehmbaren Staubehälter (3) mit einer sichtseitigen Öffnung (4), **dadurch gekennzeichnet, dass** die Aufnahmeform (2) einen Hinterschnitt (5) und eine Aussparung (6) aufweist, und der Staubehälter (3) mit seiner Außenkontur (7) zumindest teilweise in den Hinterschnitt (5) eingreift, und der Staubehälter (3) eine manuell betätigbare Biegefeder (8) mit einer Rastnase (9) aufweist, und die Rastnase (9) der Biegefeder (8) in die Aussparung (6) der Aufnahmeform (2) eingreift.

2. Anordnung nach Anspruch 1, **dadurch gekennzeichnet, dass** die Aufnahmeform (2) in ihrem Randbereich einen Vorsprung (10) aufweist, durch den der Hinterschnitt (5) gebildet wird.

3. Anordnung nach Anspruch 2, **dadurch gekennzeichnet, dass** die Oberkante (11) des Vorsprungs (10), durch die der Hinterschnitt (5) abgeschlossen wird, geradlinig verläuft.

4. Anordnung nach einem der vorhergehenden Ansprüche, **dadurch gekennzeichnet, dass** Hinterschnitt (5) und Aussparung (6) der Aufnahmeform (2) in zwei gegenüberliegenden Randbereichen der Aufnahmeform (2) angeordnet sind.

5. Anordnung nach einem der vorhergehenden Ansprüche, **dadurch gekennzeichnet, dass** Staubehälter (2) und Aufnahmeform (3) einen Formschluss bilden.

6. Anordnung nach einem der vorhergehenden Ansprüche, **dadurch gekennzeichnet, dass** die der Aufnahmeform (2) zugewandte Seite des Staubehälters (3) gewölbt ist.

7. Anordnung nach einem der vorhergehenden Ansprüche, **dadurch gekennzeichnet, dass** die Biegefeder (8) innerhalb des Staubehälters (3) angeordnet ist und durch eine Öffnung (12) in der Rückseite des Staubehälters (3) in die Aussparung (6) der Aufnahmeform (2) eingreift.

8. Anordnung nach Anspruch 7, **dadurch gekennzeichnet, dass** die Biegefeder (8) als ein über die sichtseitige Öffnung (4) des Staubehälters (2) zugängiger Untergriff ausgebildet ist.

9. Anordnung nach einem der vorhergehenden Ansprüche, **dadurch gekennzeichnet, dass** die Außenränder der Aufnahmeform (2) und des Staubehälters (3) sichtseitig auf gleicher Höhe abschließen.

10. Anordnung nach einem der vorhergehenden Ansprüche, **dadurch gekennzeichnet, dass** die sichtseitige Oberfläche des Staubehälters (3) eben ist.

11. Fahrzeugtür (13), enthaltend eine Staubehälteranordnung nach einem der Ansprüche 1 bis 10, wobei die Aufnahmeform (2) durch eine Aussparung einer zur Fahrzeugtür (13) gehörenden Türinnenverkleidung (14) gebildet wird.

12. Mittelkonsole eines Fahrzeugs, enthaltend eine Staubehälteranordnung nach einem der Ansprüche 1 bis 10.

13. Seitenverkleidung eines Fahrzeugs, enthaltend eine Staubehälteranordnung nach einem der Ansprüche 1 bis 10.

## Claims

1. A stowage receptacle arrangement (1), in particular for the interior of a vehicle, containing a receiving form (2) and a stowage receptacle (3) with an opening (4) on the exposed side which is removable from the receiving form (2), **characterised in that** the receiving form (2) has an undercut (5) and a recess (6), and the stowage receptacle (3) engages with its outer contour (7) at least partially in the undercut (5), and the stowage receptacle (3) has a manually actuated bending spring (8) with a catch projection (9), and the catch projection (9) of the bending spring (8) engages in the recess (6) in the receiving form (2).

2. An arrangement according to Claim 1, **characterised in that** the receiving form (2) has in its edge region a projection (10) by means of which the undercut (5) is formed.

3. An arrangement according to Claim 2, **characterised in that** the upper edge (11) of the projection (10) by means of which the undercut (5) is closed off extends in rectilinear manner.

4. An arrangement according to one of the preceding claims, **characterised in that** the undercut (5) and recess (6) in the receiving form (2) are arranged in two opposing edge regions of the receiving form (2).

5. An arrangement according to one of the preceding claims, **characterised in that** the stowage receptacle (2) and receiving form (3) [sic] form a positive connection.

6. An arrangement according to one of the preceding claims, **characterised in that** the side of the stowage receptacle (3) facing the receiving form (2) is curved.

7. An arrangement according to one of the preceding claims, **characterised in that** the bending spring (8) is arranged within the stowage receptacle (3) and engages in the recess (6) in the receiving form (2) through an opening (12) in the rear side of the stowage receptacle (3).

8. An arrangement according to Claim 7, **characterised in that** the bending spring (8) is in the form of an underhand grip accessible via the opening (4) on the exposed side in the stowage receptacle (2).

9. An arrangement according to one of the preceding claims, **characterised in that** the outer edges of the receiving form (2) and of the stowage receptacle (3) close off at the same level on the exposed side.

10. An arrangement according to one of the preceding claims, **characterised in that** the exposed surface of the stowage receptacle (3) is flat.

11. A vehicle door (13), containing a stowage receptacle arrangement according to one of Claims 1 to 10, wherein the receiving form (2) is formed by a recess in an inner door panel (14) belonging to the vehicle door (13).

12. A centre console of a vehicle, containing a stowage receptacle arrangement according to one of Claims 1 to 10.

13. A side lining panel of a vehicle, containing a stowage receptacle arrangement according to one of Claims 1 to 10.

## Revendications

1. Ensemble constituant un compartiment de rangement (1), destiné en particulier à l'habitacle d'un véhicule, comprenant une forme constituant un réceptacle (2) et un compartiment de rangement (3) qui peut être enlevé de la forme constituant un réceptacle (2) et qui présente une ouverture (4) du côté apparent, **caractérisé en ce que** la forme constituant un réceptacle (2) présente une contre-dépouille (5) et un évidement (6), **en ce que** le compartiment de rangement (3) vient en prise au moins en partie dans la contre-dépouille (5) par son contour extérieur (7), **en ce que** le compartiment de rangement (3) présente un ressort de flexion (8) pouvant être actionné manuellement et comportant un taquet d'encliquetage (9), et **en ce que** le taquet d'encliquetage (9) du ressort de flexion (8) vient en prise dans l'évidement (6) de la forme constituant un réceptacle (2).

2. Ensemble selon la revendication 1, **caractérisé en ce que** la forme constituant un réceptacle (2) présente dans sa zone périphérique une saillie (10) par laquelle est formée la contre-dépouille (5).

3. Ensemble selon la revendication 2, **caractérisé en ce que** le bord supérieur (11) de la saillie (10) par laquelle la contre-dépouille (5) est fermée présente un profil rectiligne.

4. Ensemble selon une des revendications précédentes, **caractérisé en ce que** la contre-dépouille (5) et l'évidement (6) de la forme constituant un réceptacle (2) sont disposés dans deux zones périphériques opposées de la forme constituant un réceptacle (2).

5. Ensemble selon une des revendications précédentes, **caractérisé en ce que** le compartiment de rangement (3) et la forme constituant un réceptacle (2) forment un ajustement par complémentarité de forme.

6. Ensemble selon une des revendications précédentes, **caractérisé en ce que** le côté du compartiment de rangement (3) faisant face à la forme constituant un réceptacle (2) est bombé.

7. Ensemble selon une des revendications précédentes, **caractérisé en ce que** le ressort de flexion (8) est disposé à l'intérieur du compartiment de rangement (3) et vient en prise par une ouverture (12) ménagée dans la face arrière du compartiment de rangement (3) dans l'évidement (6) de la forme constituant un réceptacle (2).

8. Ensemble selon la revendication 7, **caractérisé en ce que** le ressort de flexion (8) est réalisé sous la forme d'une manette inférieure accessible par l'ouverture (4) du côté apparent du compartiment de rangement (2).

9. Ensemble selon une des revendications précédentes, **caractérisé en ce que** les bords extérieurs de la forme constituant un réceptacle (2) et du compartiment de rangement (3) se terminent à la même hauteur du côté apparent.

10. Ensemble selon une des revendications précédentes, **caractérisé en ce que** la surface du compartiment de rangement (3) du côté apparent est plate.

11. Porte de véhicule (13) comportant un ensemble formant un compartiment de rangement selon une des revendications 1 à 10, dans laquelle la forme constituant un réceptacle (2) est formée par un évidement d'un habillage intérieur (14) de porte faisant partie de la porte de véhicule (13).

12. Console centrale d'un véhicule comprenant un ensemble formant un compartiment de rangement selon une des revendications 1 à 10.

13. Habillage intérieur d'un véhicule comprenant un ensemble formant un compartiment de rangement selon une des revendications 1 à 10.
